(19) Europäisches Patentamt

European Patent Office

Office européen des brevets

(11) **EP 4 742 483 A1**

(12) **DEMANDE DE BREVET EUROPEEN**

(43) Date de publication:
**13.05.2026 Bulletin 2026/20**

(21) Numéro de dépôt: **25210153.0**

(22) Date de dépôt: **21.10.2025**

(51) Classification Internationale des Brevets (IPC):
**H02J 3/32** *(2026.01)* **H02J 7/00** *(2026.01)*
**H02J 7/80** *(2026.01)* **H02J 7/82** *(2026.01)*
**H02J 7/90** *(2026.01)*

(52) Classification Coopérative des Brevets (CPC):
**H02J 7/80; H02J 3/32; H02J 7/82; H02J 7/933;**
H02J 2101/24

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **08.11.2024 FR 2412283**

(71) Demandeur: **Commissariat à l'Energie Atomique
et aux Energies
Alternatives
75015 Paris (FR)**

(72) Inventeurs:
• **KLEIN, Jean-Marie**
  **38054 GRENOBLE Cedex 09 (FR)**
• **VINIT, Laurent**
  **38054 GRENOBLE Cedex 09 (FR)**

(74) Mandataire: **Atout PI Laplace
Immeuble Up On
25 Boulevard Romain Rolland
CS 40072
75685 Paris Cedex 14 (FR)**

(54) **PROCEDE DE RECONSTRUCTION DE VALEURS INSTANTANEES DE GRANDEURS ELECTRIQUES RELATIVES A UN SYSTEME DE STOCKAGE D ENERGIE ELECTRIQUE**

(57) Procédé de reconstruction de valeurs instantanées de grandeurs électriques relatives à un système de stockage d'énergie électrique, le procédé comprenant, à un instant suivant une remontée réussie d'état de charge dudit système, un passage en revue de différentes décompositions possibles en valeurs numériques de tension et d'intensité d'une valeur courante, connue aux fins de la reconstruction, de puissance développée par le système de stockage, pour déterminer (E1), pour lesdites décompositions possibles, des valeurs d'état de charge qui en résulteraient pour le système de stockage compte tenu d'un état de charge antérieur, et une comparaison (E2) entre les vecteurs constitués chacun d'une desdites valeurs d'états de charge déterminées et des valeurs de tension et intensité associées, et des vecteurs connus d'une caractérisation préalable (E0) du système de stockage d'énergie et constitués chacun, pour un état physique accessible du système de stockage, d'une valeur d'état de charge associée à des valeurs de tension et intensité, la dite comparaison étant menée pour déterminer la décomposition la plus probable parmi lesdites décompositions possibles.

Fig. 15

**Description**

**Contexte technique**

L'invention s'inscrit dans le domaine des systèmes de stockage d'énergie par batterie - en anglais Battery energy storage system, d'acronyme BESS.

Ces systèmes de stockage se développent depuis que des batteries au lithium sont disponibles en nombre et avec des capacités significatives, et ont un intérêt pour l'effort de décarbonation de la production d'énergie, puisqu'ils permettent de stocker de l'énergie électrique et donc de décorreler l'instant de production et l'instant de consommation, une telle décorrélation étant utile pour alimenter les consommateurs avec des systèmes de production intermittents.

Ces systèmes de stockage d'énergie par batterie peuvent être stationnaires quand ils s'inscrivent dans l'approvisionnement en électricité d'équipements essentiellement immobiles et terrestres, comme des équipements industriels ou des habitations. Ils sont alors reliés à un réseau de distribution terrestre territorial, ou au moins à un réseau local par exemple domestique. Ces systèmes de stockage d'énergie par batterie peuvent être, à l'inverse, mobiles quand ils sont placés dans un véhicule auquel cas ils alimentent en premier lieu le moteur de traction, le véhicule étant une automobile un autre type de véhicule. Ainsi, le stockage peut être de quelques kWh mais aussi de plusieurs GWh.

Le système de stockage est un dipôle et fournit un courant continu (DC), qui est, si besoin et c'est souvent le cas, converti en courant alternatif (AC) par un onduleur, aussi appelé convertisseur, de puissance.

Les systèmes de stockage s'interfacent dans un réseau terrestre ou embarqué avec d'autres sources de puissance électrique, comme un équipement de production tel une centrale électrique pilotée de tout type ou une source intermittente comme une unité de production photovoltaïque ou une unité de production éolienne, ou une machine électrique fonctionnant en mode générateur. Les systèmes de stockage s'interfacent aussi avec des puits de puissance électrique, comme des consommateurs dans l'habitat ou l'industrie, ou tout type de machine électrique fonctionnant en mode moteur. Un élément peut être en fonction des circonstances soit un consommateur soit un producteur. Le système de stockage peut en fonction des circonstances fournir de la puissance électrique, et donc déstocker de l'énergie, ou profiter d'un excédent de puissance disponible pour se recharger.

L'interfaçage se fait via des transformateurs ou convertisseurs qui transmettant la puissance électrique mise en forme (type de courant, nombres de phase, tension) entre les partenaires, avec un rendement qui est en général bien connu et stable dans le temps. Du côté des partenaires identifiés comme principalement consommateurs, l'interface du transformateur ou convertisseur est qualifiée de point de livraison.

La batterie peut être placée en air ambiant, ou bénéficier d'une climatisation dans un local fermé, ou éventuellement d'un système de froissement et/ou de chauffage sans local fermé. La charge et la décharge ne provoquent un échauffement que si le courant est élevé, mais les conditions extérieures peuvent pas elles-mêmes mener à des températures basses ou élevées, alors que les cellules ont un fonctionnement optimal dans une gamme de température donnée, et doivent être protégées contre des températures excessives.

La gestion de la température est donc un enjeu notamment dans le domaine des batteries pour les véhicules où les intensités circulantes sont importantes en regard de la capacité des batteries utilisées, mais aussi pour les batteries stationnaires utilisées dans des conditions peu tempérées et qu'il a été décidé de ne pas équiper d'une climatisation puissante, pour notamment éviter d'avoir à les surdimensionner.

Le système de stockage d'énergie doit être suivi dans le temps pour identifier son évolution et piloter au mieux son fonctionnement.

Pour cela, la batterie ou système de stockage dispose traditionnellement d'un système de gestion de la batterie BMS qui est un système électronique permettant le contrôle, la charge et la décharge de la batterie, en suivant les tensions, températures et états de charge des différentes cellules. Un BMS protège la batterie en l'empêchant de fonctionner en dehors de sa plage de fonctionnement sécurisée. Il équilibre aussi les cellules et par ailleurs communique les données globales de la batterie à tout superviseur externe qui en aurait besoin. Ces données globales comprennent notamment la tension instantanée aux bornes de la batterie, sa température, qui peut par exemple être une température prise en un point représentatif de la batterie elle-même ou de son environnement proche ou une température extrémale ou moyenne parmi plusieurs températures mesurées dans la batterie elle-même, ainsi qu'un courant qui peut être un courant sortant ou un courant entrant, ou un courant nul.

Le système de gestion de la batterie est souvent distant dans les systèmes de stockage terrestres. Il peut être mis en œuvre dans un système d'informatique en nuage (cloud), à l'aide des serveurs informatiques à distance, hébergés dans des centres de données connectés à Internet pour stocker, gérer et traiter des données. Il peut être inclus dans un système de gestion d'énergie EMS (energy management system) qui effectue des calculs de grandeurs électriques à partir des grandeurs connues et de la topologie du réseau et garantit le bon fonctionnement du réseau.

La communication au système de gestion des profils temporels de tension et courant batteries sont utiles pour la réalisation de pronostics d'états de santé en vue de faciliter la maintenance prédictive de système de stockage d'énergie par batterie BESS.

Dans certaines circonstances, certaines données instantanées mesurées dans le système de stockage ne parviennent pas au système de gestion. Les causes pour une telle situation peuvent être diverses : un capteur a dysfonctionné ponctuellement, une connexion sans fil a été interrompue momentanément, une erreur informatique liée à un logiciel ou un composant matériel s'est produite. La cause en général est temporaire, soit parce qu'elle se résout par des processus automatique mis en œuvre par logiciel, soit parce qu'une intervention humaine est possible rapidement. Parfois la cause peut perdurer plus longtemps, notamment dans le cas d'un système de stockage difficile d'accès, ce qui peut exister en milieu de montagne notamment, ou sur une île. On est confronté alors à devoir effectuer des hypothèses sur les données manquantes, pour poursuivre l'exploitation sans interruption avec une bonne performance et bien sûr en sécurité.

La gestion des données manquantes pour les algorithmes basés sur les données (data-driven methods en anglais) constitue un défi en général. On distingue l'imputation de données et la reconstruction des données. L'imputation des données est l'ajout de données réalistes à la place des données manquantes. La reconstruction des données consiste, sur une série complète, qui a été par exemple complétée par imputation, à reconstruire les données pour enlever le bruit et gérer les données aberrantes.

Les méthodes de gestion de données manquantes peuvent ainsi être classées en deux catégories : les méthodes statistiques et les méthodes par apprentissage automatique. Les méthodes statistiques sont simples et efficaces mais présentent des imprécisions. Les méthodes par apprentissage dite Machine Learning peuvent être plus précises mais sont complexes à mettre en œuvre et nécessitent des capacités informatiques importantes d'où une utilisation hors ligne.

L'article M. Xiang, et al. (2020) State-of-Health Prognosis for Lithium-Ion Batteries Considering the Limitations in Measurements via Maximal Information Entropy and Collective Sparse Variational Gaussian Process', IEEE Access, 8, pp. 188199-188217 présente une méthode statistique pour l'imputation de données, pour le pronostic et la gestion de l'état de santé (SOH). Il utilise une interpolation de données statistiques linéaires et une recherche d'entropie maximale d'information.

Le document DE102021203729 présente une mesure par apprentissage pour prédire un état de vieillissement (state of health SOH - état de santé) d'un dispositif de stockage d'énergie.

Dans les deux cas, soit la méthode est longue à mettre en œuvre, soit elle fournit des résultats qui ne sont pas pleinement satisfaisants.

Il arrive parfois, comme expliqué, que les données relatives au système de stockage soient absentes ou erronées dans les fichiers de suivi des systèmes de stockage. La méthode proposée ci-après permet de pallier ce problème en utilisant le fait que la puissance au point de livraison est connue par une voie qui n'est pas interrompue, et qui peut donc être utilisée pour combler le déficit de données mesurées.

L'invention consiste donc en une méthode utilisant les autres données accessibles du système et ainsi moins gourmande en données nécessaires que par exemple les méthodes par apprentissage et également plus précise.

## Caractéristiques de l'invention et avantages

Pour cela il est proposé un procédé de reconstruction de valeurs instantanées de grandeurs électriques relatives à un système de stockage d'énergie électrique.

Le procédé comprend, à un instant suivant une remontée réussie d'état de charge dudit système, un passage en revue de différentes décompositions possibles en valeurs numériques de tension et d'intensité d'une valeur courante, connue aux fins de la reconstruction, de puissance développée par le système de stockage.

Ce passage en revue est mené pour déterminer, pour lesdites décompositions possibles et par intégration de l'intensité sur le temps, des valeurs d'état de charge qui en résulteraient pour le système de stockage compte tenu d'un état de charge antérieur.

Le procédé comprend alors une comparaison entre

- les vecteurs constitués chacun d'une desdites valeurs d'état de charge déterminées et des valeurs de tension et intensité associées,

- et des vecteurs connus d'une caractérisation préalable du système de stockage d'énergie et constitués chacun, pour un état physique accessible du système de stockage, d'une valeur d'état de charge et des valeurs de tension et intensité associées.

La dite comparaison est menée pour déterminer la décomposition la plus probable parmi lesdites décompositions possibles.

L'invention est avantageuse car la méthode utilisée est très précise, tout en étant peu consommatrice de calculs, ce qui est remarquable au vu de l'état de l'art où seuls des méthodes très consommatrices de calcul étaient disponibles, ou encore des méthodes peu fiables numériquement.

Selon des caractéristiques optionnelles et avantageuses :

- ledit système de stockage peut être interfacé avec un équipement de transmission de puissance en sorte qu'un bilan de puissance instantané dévoilant la valeur courante de puissance développée par le système de stockage est accessible à un système de gestion du système de stockage d'énergie électrique.

- ladite comparaison peut être faite en minimisant la différence de valeur d'état de charge.

- la remontée réussie peut être aussi une remontée réussie d'une valeur de température du système de stockage, la caractérisation préalable inclut une variation en température du système de stockage, et la comparaison est menée entre les vecteurs constitués chacun d'une desdites valeurs d'états de charge déterminées et des valeurs de tension et intensité associées, ainsi que de la dernière température connue ou estimée, avec les vecteurs connus de la caractérisation préalable qui contiennent en plus une valeur de température.

- une gestion du système de stockage peut être effectuée de manière délocalisée par rapport audit système de stockage.

- la décomposition de puissance peut être un produit entre intensité délivrée, et tension entre les bornes, ladite intensité circulante étant majorée en valeur absolue et ladite tension entre les bornes étant minorée et majorée par des valeurs relatives à l'usage normal du système de stockage d'énergie.

- le système de stockage d'énergie peut être un système stationnaire, relié à un réseau de distribution terrestre par un onduleur.

- ledit onduleur peut relier également un système photovoltaïque de production d'électricité audit réseau de distribution terrestre.

- le procédé peut être utilisé par récurrence, pour reconstruire plusieurs tensions, intensités et états de charge manquants à des instants successifs.

L'invention porte aussi sur un dispositif de reconstruction de valeurs instantanées de grandeurs électriques relatives à un système de stockage d'énergie électrique, le dispositif comprenant des moyens pour, à un instant suivant une remontée réussie d'état de charge dudit système, effectuer un passage en revue de différentes décompositions possibles en valeurs numériques de tension et d'intensité d'une valeur courante, connue aux fins de la reconstruction, de puissance développée par le système de stockage, pour déterminer, pour lesdites décompositions possibles, des valeurs d'état de charge qui en résulteraient pour le système de stockage compte tenu d'un état de charge antérieur, et des moyens pour mener une comparaison entre les vecteurs constitués chacun d'une desdites valeurs d'état de charge déterminées et des valeurs de tension et intensité associées, et des vecteurs connus d'une caractérisation préalable du système de stockage d'énergie et constitués chacun, pour un état physique accessible du système de stockage, d'une valeur d'état de charge et des valeurs de tension et intensité associées, la dite comparaison étant menée pour déterminer la décomposition la plus probable parmi lesdites décompositions possibles.

Optionnellement et avantageusement, ledit système de stockage peut être interfacé avec un équipement de transmission de puissance en sorte qu'un bilan de puissance instantané dévoilant la valeur courante de puissance développée par le système de stockage est accessible à un système de gestion du système de stockage d'énergie électrique.

Et ladite comparaison peut être faite dans le dispositif en minimisant la différence entre les valeurs d'état de charge.

**Liste des figures**

La figure 1 représente un exemple de système auquel s'applique l'invention.

La figure 2 représente un exemple de profil temporel utilisé pour un mode de réalisation de l'invention, les valeurs représentées étant la tension aux bornes de la batterie et l'intensité du courant sortant de la batterie.

La figure 3 représente un autre aspect de ce profil, la valeur représentée étant l'état de charge de la batterie.

La figure 4 représente un autre aspect de ce profil, la valeur représentée étant la puissance fournie par la batterie.

La figure 5 représente un autre aspect de ce profil, la valeur représentée étant une température de la batterie.

La figure 6 représente l'évolution de la tension aux bornes de la batterie en fonction du temps sous un courant de charge ou décharge donné et constant.

La figure 7 représente le lien observé, qui n'est pas univoque, entre l'état de charge et la tension aux bornes.

La figure 8 est une cartographie de l'état de charge en fonction de l'intensité du courant sortant ou entrant et la tension aux bornes.

La figure 9 identifie sur le profil temporel des figures 2 à 5, et plus précisément en lien avec la valeur de puissance qui a été détaillée en figure 4, un instant qui sert d'exemple dans les figures suivantes.

La figure 10 représente les couples tension courant compatibles avec la puissance observée à l'instant identifié en figure 9.

La figure 11 représente les états de charge pour les différents couples de la figure 10.

La figure 12 représente la mise en regard de l'état de charge calculé en relation avec les couples des figures 10 et 11 avec les états de charge mesurés pour les mêmes couples.

La figure 13 représente un exemple de profil temporel reconstruit grâce à l'invention - la valeur représentée étant la tension.

La figure 14 représente sur ce même un exemple la valeur du courant.

La figure 15 schématise le procédé utilisé.

**Description en relation avec les figures**

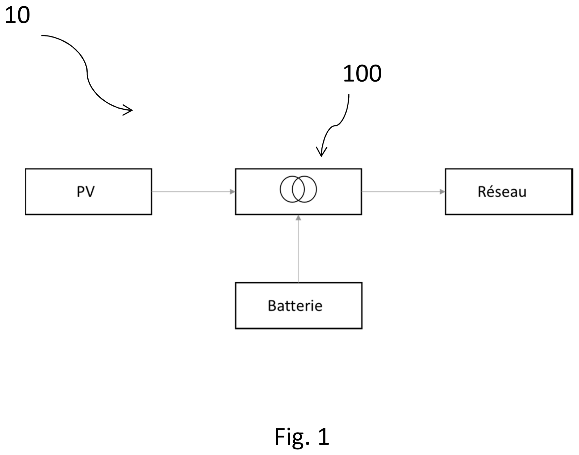

[Fig. 1] En figure 1, on a représenté un système de gestion de puissance électrique 10 comprenant un champ photovoltaïque PV, produisant une électricité en courant continu, et une batterie, fonctionnant également en courant continu, connectés l'un et l'autre à un réseau terrestre de distribution d'électricité à courant alternatif via un onduleur de puissance 100, unique, auxquels le champ photovoltaïque PV et la batterie sont connectés, séparément l'un de l'autre. Un transfert de puissance est possible du champ photovoltaïque à la batterie ou inversement avec un rendement assimilable à 1, à travers la partie courant continu de l'onduleur de puissance 100.
Il s'agit d'un mode de réalisation de l'invention, qui n'est pas limitée à un tel agencement. Ici, le champ photovoltaïque et la batterie, tant que l'état de charge de cette dernière n'est pas trop bas, alimentent en puissance électrique le réseau de distribution, qui comprend des consommateurs. La liaison entre le réseau de distribution et l'onduleur est donc appelé point de livraison. Le réseau comprend aussi potentiellement des producteurs. La batterie peut aussi être rechargée, quand son état de charge n'est pas maximal, par la puissance fournie par le champ photovoltaïque, ou par le réseau quand celui-ci comporte des producteurs, ou par les deux simultanément.
En situation favorable, la tension aux bornes de la batterie et le courant de charge ou de décharge de celle-ci sont connus à tout instant.
L'invention s'intéresse à la situation dans laquelle des données de la batterie sont inconnues, alors que les données du champ photovoltaïque, tension aux bornes et courant en sortie, et celles du réseau de distribution, à nouveau tension aux bornes et courant, sont connues à tout moment.
En termes de puissance si $\upsilon$ est le rendement de l'onduleur de puissance 100, et en appliquant la convention selon laquelle la puissance développée par la batterie $P_{batt}$ est négative en décharge, on a la relation, qui exprime le fait que la puissance fournie au réseau $P_{réseau}$ est la somme des puissances qui lui sont transmises par l'onduleur en provenance du champ photovoltaïque ($P_{PV}$) et de la batterie.

$$\upsilon P_{PV} - \upsilon P_{Batt} = P_{réseau}$$

La puissance de la batterie (ou puissance de charge de la batterie) s'exprime donc comme

$$P_{batt} = -\frac{P_{réseau}}{v} + P_{PV}$$

Bien que la puissance développée à tout instant par la batterie soit le produit de la tension à ses bornes par l'intensité du courant circulant selon l'égalité

$$P_{batt}(t) = I_{batt}(t) \times U_{batt}(t,I)$$

comme la tension U dépend de l'intensité I, et que ces deux grandeurs sont inconnues, il existe de nombreux couples de valeurs (U, I) permettant de vérifier l'équation même en limitant le raisonnement comme cela s'impose aux intervalles de tensions et courants admissibles par la batterie.

Les valeurs instantanées de la puissance développée par la batterie $P_{batt}(t)$ connues grâce à la puissance instantanée au point de livraison et aux rendements.

Mais dans le scénario d'intérêt dans lequel se place l'invention, les valeurs instantanées de tension aux bornes $U_{batt}$ (t) et d'intensité délivrée $I_{batt}$ (t) sont inconnues - il s'agit de données manquantes.

Il existe une dépendance en température de la tension aux bornes de la batterie. Pour la prendre en compte on ajoute une dimension supplémentaire à toutes les matrices dans les calculs qui sont présentés ci-après. Mais pour alléger la description, cette dépendance à la température n'est pas mentionnée systématiquement dans la description qui suit.

On remonte à $U_{batt}$ et $I_{batt}$ en utilisant l'état de charge SOC (pour state of charge) de la batterie.

Une étape préliminaire est la génération de la matrice des valeurs d'état de charge $SOC_{read}$ en fonction de la valeur de tension U et de la valeur d'intensité I, ces valeurs ayant été déterminées expérimentalement au cours d'une caractérisation préalable du système de stockage, avant par exemple sa mise à disposition de l'exploitant.

Le suffixe « read » fait référence au fait que les états de charge en question ont été mesurés, en l'occurrence au cours d'une phase de caractérisation préalable.

Une étape ultérieure, pendant la phase d'exploitation, et dans une situation où des données sont manquantes, est l'identification pour une puissance instantanée de batterie $P_{batt}(t)$ donnée, correspondant à celle connue par exemple grâce au point de livraison, de tous les couples d'intensité et de tension (I, U) qui permettent d'avoir $P_{batt}=U*I$, c'est-à-dire de retrouver cette puissance délivrée.

Une étape associée est le calcul, par coulométrie (intégration de l'intensité sur le temps), de l'état de charge correspondant $SOC_{calc}$ pour chaque couple tension U, intensité I. Le suffixe calc fait référence au fait que l'état de charge en question est issu d'un calcul, en l'occurrence par coulométrie, et n'a pas été mesuré. Le calcul peut être mené de plusieurs manières assez proches les unes des autres, en tenant compte essentiellement de l'intensité étudiée et du pas temporel (durée écoulée depuis la dernière valeur connue, si elle a été mesurée et remontée, ou reconnue, dans l'hypothèse où elle a été calculée, d'état de charge).

Une étape ultérieure, pendant la phase d'exploitation, est la comparaison, pour chaque couple de tenson et d'intensité (Ux,Ix) de l'état de charge mesuré $SOC_{read}(Ux,Ix)$ avec l'état de charge calculé $SOC_{calc}(Ux,Ix)$

On soustrait deux matrices et on recherche la valeur minimale de la matrice résultant de cette soustraction. Les coordonnées de ce minimum sont les coordonnées du couple unique U,I menant à la puissance développée par la batterie $P_{batt}$ au bon état de charge SOC, compte tenu de la caractérisation préalable du système.

Le procédé est validé par vérification des valeurs en différents points et reconstruction de profil temporel.

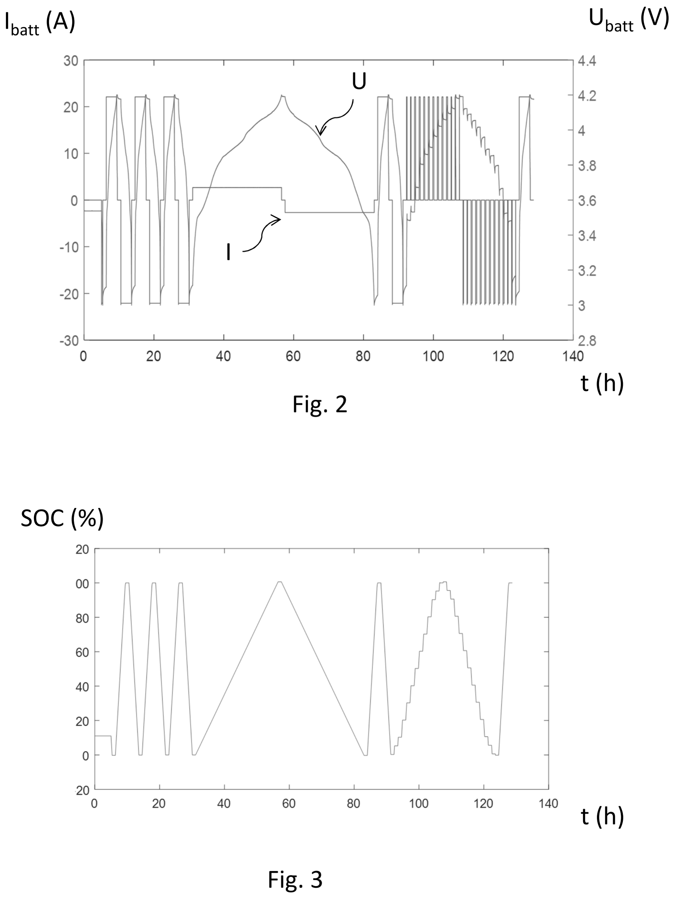

[Fig. 2] On choisit pour discuter du procédé d'un profil temporel représenté en figures 2 à 5. Pour l'exemple, on travaille sur un profil temporel dont les résultats sont issus de tests en laboratoire sur une cellule lithium-ion (Li-ion) donnée à une température fixe de 25°C. La longueur du profil est représentée en abscisses et est de 140 h. La figure 2 représente en ordonnées le courant délivré par la batterie de -30 A à +30 A (la courbe est marquée I), et la tension aux bornes de la batterie de 2,8 à 4,4 V (la courbe est marquée U).

Les courants minimum et maximum de ce profil temporel sont compris entre C/25 et C/3 en charge et -C/25 et -C/3 en décharge. C/25 et C/3 sont des valeurs de courant à laquelle la capacité de la batterie serait consommée en 25 heures et en 3 heures, respectivement.

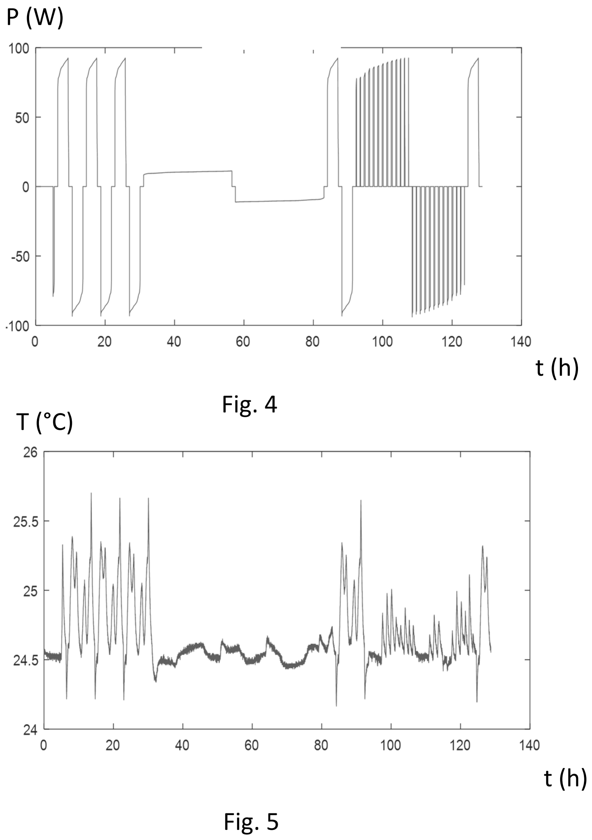

[Fig. 3] En figure 3, l'état de charge de la cellule est représenté en ordonnées de 0 à 100%. Les ordonnées sont identiques à celles de la figure 2 (c'est également le cas aux figures 4 et 5).

[Fig. 4] En figure 4, la puissance développée par la batterie est représentée en ordonnées de -100 W à +100 W.

[Fig. 5] En figure 5, la température de la batterie est représentée en ordonnées, de 24 à 26°C.

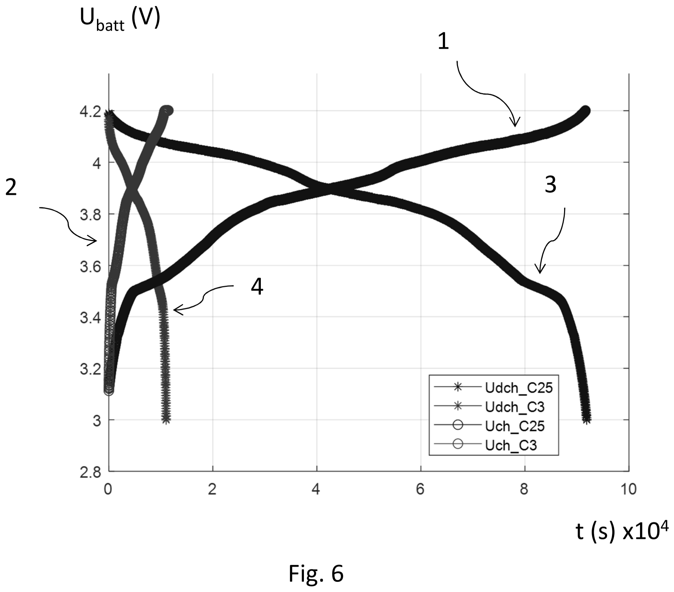

[Fig. 6] Parallèlement, on génère une base de données de valeurs lues d'état de charge $SOC_{read}$ en fonction de la tension aux bornes de la batterie $U_{batt}$ et de l'intensité circulant en sortie de la batterie $I_{batt}$ (intensité délivrée), issue d'essais distincts réalisés en charge et en décharge à courant constants entre C/25 et C/3.

Au cours d'un tel essai, l'état de charge et la tension augmentent tous les deux, en charge, et l'état de charge et la tension diminuent tous les deux, en décharge.

Faire un grand nombre d'essais indépendants pour une valeur de courant constant permet d'obtenir des données moyennées et donc plus fiables.

On utilise par exemple douze valeurs différentes de courant (ce qui peut donc faire 24 courbes, ces valeurs étant utilisées en décharge et en charge).

Les résultats pour C/25 et C/3 sont présentés en figure 6 où l'axe des abscisses représente le temps de 0 à 10000 s (environ 3h). La courbe 1 est la courbe de charge à C/25, la courbe 2 celle de charge à C/3, la courbe 3 est la courbe de décharge à C/25 et la courbe 4 est la courbe de décharge à C/3.

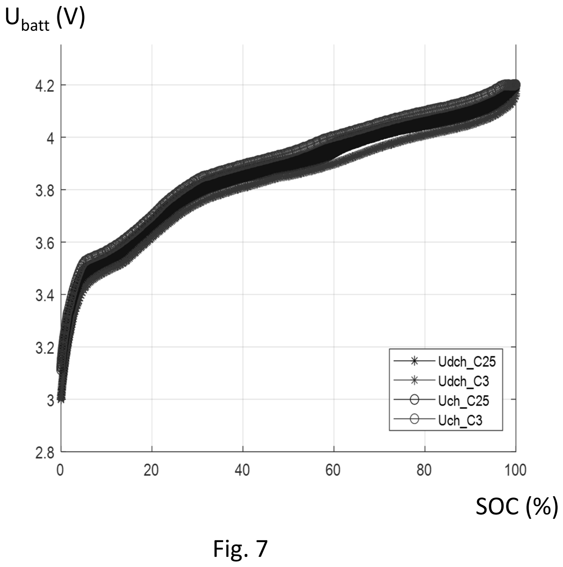

[Fig. 7] De ces données on peut représenter l'état de charge SOC de la batterie en fonction de la tension. Sur la figure 7 l'état de charge est en abscisses de 0 à 100%, la tension en ordonnées de 2,8 V à 4,2 V. Il apparait clairement que la relation n'est pas univoque.

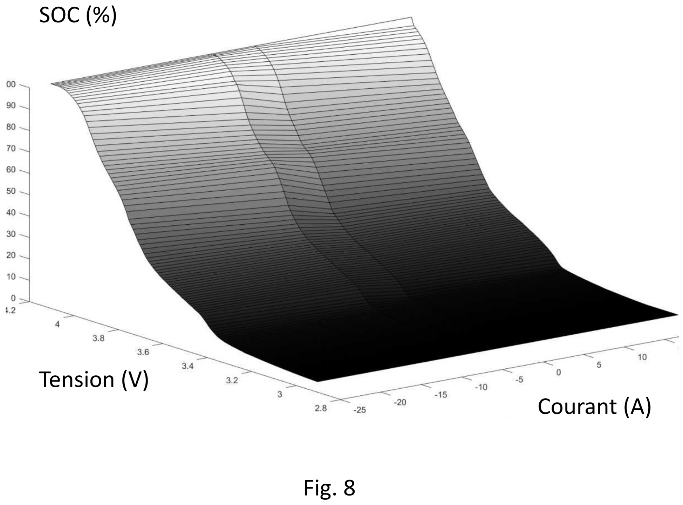

[Fig. 8] On génère aussi une surface de valeurs d'état de charge $SOC_{read}$ en fonction de l'intensité $I_{batt}$ circulant aux bornes de la batterie et de la tension entre les bornes de la batterie $U_{batt}$, à l'aide des points de mesure et en interpolant entre les points de mesure pour lisser la surface. L'état de charge est en ordonnées, alors que les deux grandeurs d'abscisses sont la tension (en Volts, de 2,8 à 4,2) et le courant en décharge et en charge (en A, de -25 à +25).

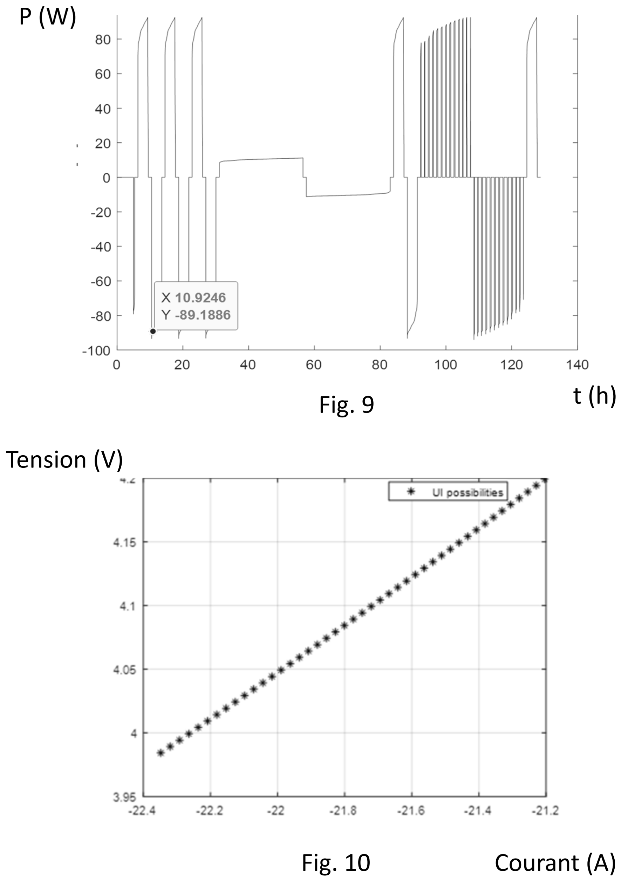

[Fig. 9] Le procédé comprend ensuite une prise en charge d'une batterie donnée. Pour une valeur de puissance batterie $P_{batt}$ donnée, issue d'un profil temporel de batterie quelconque, on calcule tous les couples possibles (I,U) qui permettent de vérifier $P_{batt}$ = I x U.

Le point choisi est représenté sur la figure 9 (qui reprend la courbe de la figure 4) : il s'agit d'un point pour lequel la puissance développée par la batterie est -89,1886 W.

[Fig. 10] On limite les choix des deux paramètres I et U par la tension minimale Umin et la tension maximale Umax de la batterie, et l'intensité maximale Imax et l'intensité minimale Imin. Les extrema d'intensité peuvent être ceux choisis précédemment pour générer la surface d'états de charge $SOC_{read}$ ou dépendre des courants minimum et maximum du profil temporel d'usage et/ou éventuellement de la cellule.

Les points obtenus sont représentés en figure 10, dans laquelle l'axe des abscisses est celui des intensités, et celui des ordonnées est celui des tensions. Les points représentés sont des points en décharge : le courant est entre -22,4 A et -21,2A.

Le caractère apparemment linéaire, sur la figure 10, de la relation entre U et I est lié à la faible amplitude des valeurs - en fait U et I varient à un facteur multiplicatif près, comme l'inverse l'une de l'autre, P étant fixée et constituant leur produit.

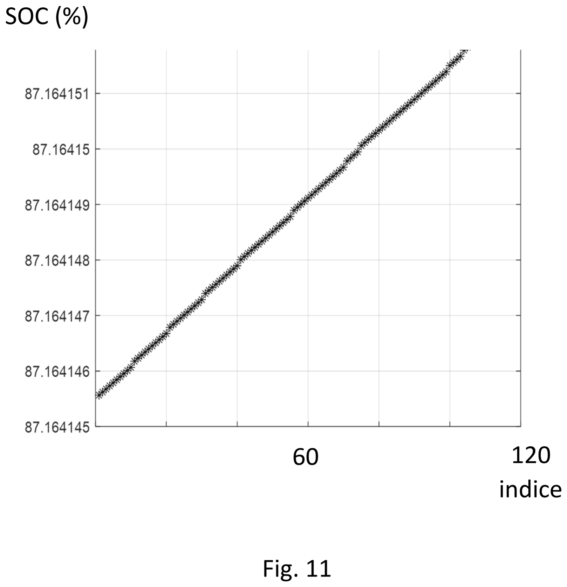

[Fig. 11] On calcule alors l'état de charge ($SOC_{calc}$) pour chaque couple (U,I) généré à l'étape précédente. Le point identifié par une puissance développée $P_{batt}$ et auquel on s'intéresse est considéré comme le premier point manquant du profil. On connait donc ainsi par remontée de données habituelles, fiables, l'état de charge SOC de la batterie au point précédent. On est donc capable de calculer par coulométrie le nouvel état de charge SOC correspondant à la puissance batterie $P_{batt}$ manquante. Ce calcul est fait pour chaque couple (U, I).

On obtient une série de valeurs d'état de charge. Celle-ci est représentée à la figure 11 : en abscisses on a les numéros des couples (U,I) expérimentaux successifs, qui sont ici au nombre d'environ 120, et en ordonnées, on a représenté les valeurs d'état de charge SOC aux alentours de 87%, et dans un intervalle de longueur environ $7.10^{-6}$ %.

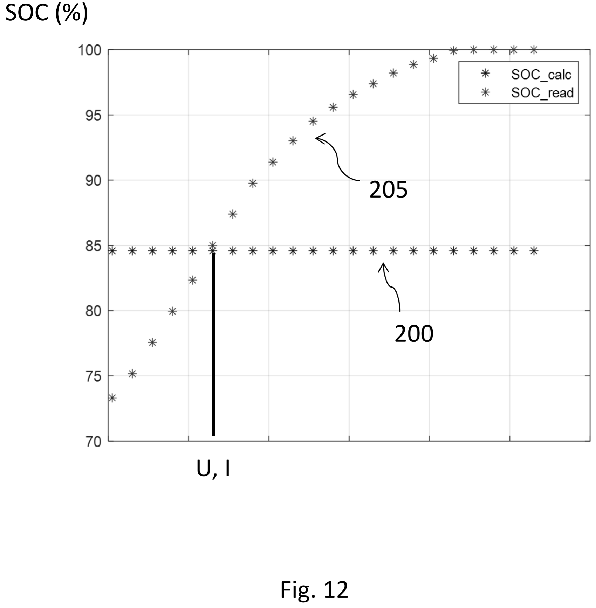

[Fig. 12] Pour chaque couple de tension et intensité (Ux,Ix) on cherche ensuite $SOC_{read}$(Ux,Ix) représenté par les points 200 et on compare à $SOC_{calc}$(Ux,Ix), représenté par les points 205.

On soustrait ensuite ces deux vecteurs de SOC et on détermine les valeurs U,I associées au minimum du résultat, qui correspondent aux valeurs U et I les plus probables, les mieux approchées de la réalité, parmi celles pour lesquelles les calculs de coulométrie ont été faits et compte tenu de la caractérisation qui a été faite préalablement du système de stockage.

Les valeurs associées au mininum sont les coordonnées du couple unique de valeurs de tension et d'intensité (U,I) correspondant à la puissance développée par la batterie $P_{batt}$ au bon état de charge SOC.

On vérifie que les résultats sont satisfaisants pour d'autres points discrets du profil, et on effectue des calculs des écarts et des erreurs.

Dans tableau qui suit, la première colonne indique un numéro de point, la deuxième la valeur de puissance développée en Watts, la troisième la valeur de tension effective en volts, la quatrième la valeur effective de courant en A et les deux dernières les valeurs calculées de tension et courant. On constate qu'elles sont toujours très proches de valeurs effectives.

| | | | | | |
|---|---|---|---|---|---|
| 1000 | 84,53791781 | 3,8247 | 22,10315 | 3,8293 | 22,09627 |
| 1500 | -89,18856808 | 4,0348 | -22,10483 | 4,0393 | -22,06373 |
| 2500 | 91,79202315 | 4,15438 | 22,09524 | 4,1493 | 22,10627 |

(suite)

| 2535 | 37,02379236 | 4,19888 | 8,81754 | 4,1893 | 8,81627 |
|---|---|---|---|---|---|
| 3157 | -66,38854118 | 3,00335 | -22,10483 | 2,9993 | -22,16373 |
| 3500 | 85,61080471 | 3,87324 | 22,10315 | 3,8693 | 22,10627 |
| 6285 | 10,54624943 | 3,93392 | 2,68085 | 3,9293 | 2,66627 |

Ce tableau montre que pour n'importe quel point absent, suivant dans le temps un point pour lesquels les valeurs sont connues, on peut recalculer par l'invention le couple (U,I) et donc l'état de charge SOC avec une erreur très faible. Et en procédant de proche en proche on reconstruit un profil.

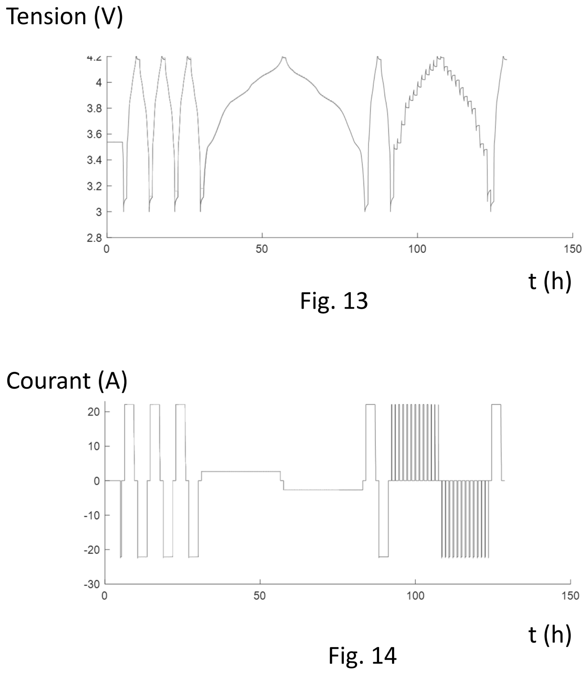

[Fig. 13] La figure 13 montre une partie du profil temporel choisi dans l'exemple, reconstruit selon la méthode. Il s'agit ici des valeurs de tension.

[Fig. 14] La figure 14 montre les valeurs d'intensité reconstruites selon le même processus et correspondant donc aux valeurs de tension de la figure 14.

Sans utilisation de la méthode les valeurs de tension et d'intensité sont beaucoup moins bien maîtrisées en l'absence de remontée des données de la batterie, et rapidement, des informations utiles ne sont plus ni accessibles ni constructibles.

Selon un mode de réalisation constituant une amélioration, on corrige des erreurs sur la tension et l'intensité qui augmentent lors des phases de relaxation au cours desquelles la puissance développée est nulle. Grâce à la méthode, dès lors que la puissance développée par la batterie est à nouveau non nulle, les données de tension et d'intensité sont à nouveau retrouvées de manière correcte selon les principes de l'invention. Ainsi, une amélioration est apportée pour tenir compte de l'évolution de la tension lors des phases de relaxe et ainsi corriger la prévision. Lors de ces phases, la puissance développée $P_{batt}$=0 W, et l'intensité $I_{batt}$=0 A. Pour déterminer l'évolution de la tension $U_{batt}$ en fonction du temps on utilise une cartographie de tension de relaxe apprise à l'avance sur le profil temporel de calibration initial, cette cartographie dépendant, notamment, de la valeur et du signe du courant précédent cette relaxe au cours d'une pause. Ainsi on a plusieurs cartographies établies à l'avance, indexées par une valeur de courant négative ou positive, et on choisit la cartographie adaptée en fonction de la valeur de courant constatée juste avant la phase de relaxe.

Selon une variante, compatibles avec les précédentes, on ajoute une dimension ou variable additionnelle correspondant à une température, entre -40°C et +60°C, aux données enregistrées et calculées sous forme de matrice, et un capteur de température sur la batterie. Ainsi la température est également être prise en compte. La température prise en compte est celle de l'onduleur ou d'un élément de l'environnement, comme le champ photovoltaïque, notamment si les courant de charge et de décharge de la batterie sont inférieurs à par exemple C/3, auquel cas la batterie ne s'échauffe pas par elle-même et adopte la température ambiante, qui peut être obtenue ainsi par l'onduleur ou un autre élément communiquant sans faute avec le gestionnaire d'énergie EMS assurant tout ou partie de la fonction BMS.

L'invention s'applique à un système comportant une batterie et d'autres composants qui peuvent être source de puissance (par exemple une source d'énergie renouvelable, ou un réseau de distribution territorial fournissant de la puissance) ou à l'inverse puit de puissance (par exemple un consommateur local ou un réseau territorial client), ou encore alternativement source ou puit de puissance en fonction des périodes considérées.

Une fois les données manquantes reconstruites selon l'invention, le système de gestion de batterie BMS, ou le gestionnaire d'énergie du système EMS peut définir, à l'aide des données reconstruites, une commande de puissance à développer par la batterie pour l'instant ou les instants qui suivent la reconstruction de données.

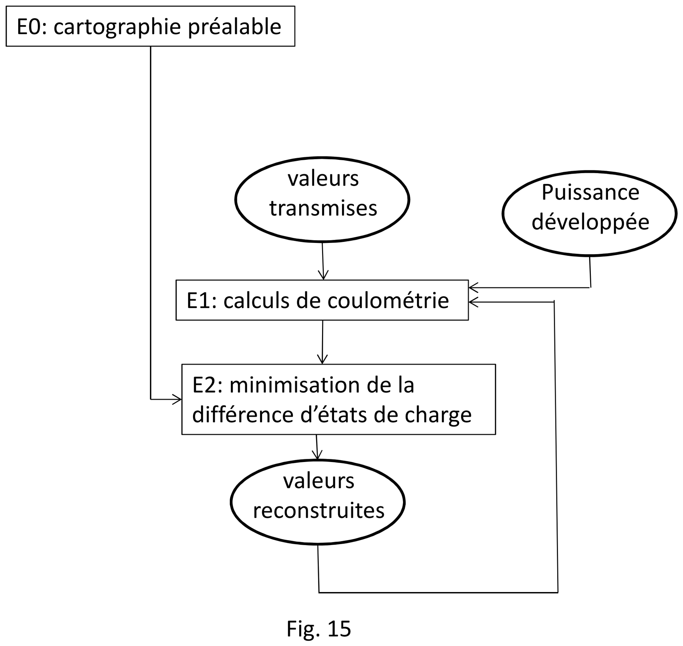

[fig. 15] En figure 15, on a représenté le processus selon un mode de réalisation de l'invention.

Une cartographie préalable est effectuée une fois pour toute au cours d'une étape E0 pour caractériser le système de stockage d'énergie et connaître son état de charge en fonction de valeurs de température, tension aux bornes et intensité délivrée, selon les principes discutés en relation avec les figures 6 à 8.

Puis, de manière circulaire, on effectue des cycles d'étapes E1 et E2 comme suit.

Des calculs de coulométrie sont effectués au cours d'une étape E1 à l'aide de la puissance développée communiquée par le point de livraison ou tout partenaire du réseau, pour déterminer les possibles états de charge, selon les principes discutés aux figures 10 et 11.

Puis, sur la base des résultats de ces calculs, on minimise, selon les principes discutés en relation avec la figure 12 et au cours d'une étape E2, la différence entre les états de charge possibles calculés à l'étape E1 et ceux présents dans la caractérisation de l'étape E0. Cela permet de déterminer des valeurs reconstruites.

Les calculs de coulométrie de l'étape E1 sont effectués en utilisant un état de charge transmis au moins une fois, puis lors des récurrences suivantes, sont effectués avec la dernière valeur d'état de charge reconstruite en date.

**Revendications**

1. Procédé de reconstruction de valeurs instantanées de grandeurs électriques relatives à un système de stockage d'énergie électrique, le procédé comprenant, à un instant suivant une remontée réussie d'état de charge dudit système, un passage en revue de différentes décompositions possibles en valeurs numériques de tension et d'intensité d'une valeur courante, connue aux fins de la reconstruction, de puissance développée par le système de stockage, pour déterminer (E1), pour lesdites décompositions possibles, des valeurs d'état de charge qui en résulteraient pour le système de stockage compte tenu d'un état de charge antérieur, et une comparaison (E2) entre les vecteurs constitués chacun d'une desdites valeurs d'état de charge déterminées et des valeurs de tension et intensité associées, et des vecteurs connus d'une caractérisation préalable (E0) du système de stockage d'énergie et constitués chacun, pour un état physique accessible du système de stockage, d'une valeur d'état de charge et des valeurs de tension et intensité associées, la dite comparaison étant menée pour déterminer la décomposition la plus probable parmi lesdites décompositions possibles.

2. Procédé de reconstruction de valeurs selon la revendication 1, **caractérisé en ce que** ledit système de stockage est interfacé avec un équipement de transmission de puissance (100) en sorte qu'un bilan de puissance instantané dévoilant la valeur courante de puissance développée par le système de stockage est accessible à un système de gestion du système de stockage d'énergie électrique.

3. Procédé de reconstruction de valeurs selon la revendication 1 ou la revendication 2, **caractérisé en ce que** ladite comparaison (E2) est faite en minimisant la différence entre les valeurs d'état de charge.

4. Procédé de reconstruction de valeurs selon l'une des revendications 1 à 3, **caractérisé en ce que** la remontée réussie est aussi une remontée réussie d'une valeur de température du système de stockage, la caractérisation préalable inclut une variation en température du système de stockage, et la comparaison est menée entre les vecteurs constitués chacun d'une desdites valeurs d'états de charge déterminées et des valeurs de tension et intensité associées, ainsi que de la dernière température connue ou estimée, avec les vecteurs connus de la caractérisation préalable qui contiennent en plus une valeur de température.

5. Procédé de reconstruction de valeurs selon l'une des revendications 1 à 4, **caractérisé en ce qu'**une gestion du système de stockage est effectuée de manière délocalisée par rapport audit système de stockage.

6. Procédé de reconstruction de valeurs selon l'une des revendications 1 à 5, **caractérisé en ce que** la décomposition de puissance est un produit entre intensité délivrée, et tension entre les bornes, ladite intensité circulante étant majorée en valeur absolue et ladite tension entre les bornes étant minorée et majorée par des valeurs relatives à l'usage normal du système de stockage d'énergie.

7. Procédé de reconstruction de valeurs selon l'une des revendications 1 à 6, **caractérisé en ce que** le système de stockage d'énergie est un système stationnaire, relié à un réseau de distribution terrestre par un onduleur.

8. Procédé de reconstruction de valeurs selon la revendication 7, **caractérisé en ce que** ledit onduleur relie également un système photovoltaïque de production d'électricité audit réseau de distribution terrestre.

9. Procédé de reconstruction de valeurs selon l'une des revendications 1 à 8, **caractérisé en ce que** le procédé est utilisé par récurrence, pour reconstruire plusieurs tensions, intensités et états de charge manquants à des instants successifs.

10. Dispositif de reconstruction de valeurs instantanées de grandeurs électriques relatives à un système de stockage d'énergie électrique, le dispositif comprenant des moyens pour, à un instant suivant une remontée réussie d'état de charge dudit système, effecteur un passage en revue de différentes décompositions possibles en valeurs numériques de tension et d'intensité d'une valeur courante, connue aux fins de la reconstruction, de puissance développée par le système de stockage, pour déterminer, pour lesdites décompositions possibles, des valeurs d'état de charge qui en résulteraient pour le système de stockage compte tenu d'un état de charge antérieur, et des moyens pour mener une comparaison entre les vecteurs constitués chacun d'une desdites valeurs d'état de charge déterminées et des valeurs de tension et intensité associées, et des vecteurs connus d'une caractérisation préalable du système de stockage d'énergie et constitués chacun, pour un état physique accessible du système de stockage, d'une valeur d'état de charge et des valeurs de tension et intensité associées, la dite comparaison étant menée pour déterminer la décomposition la plus probable parmi lesdites décompositions possibles.

**11.** Dispositif de reconstruction de valeurs selon la revendication 10, **caractérisé en ce que** ledit système de stockage est interfacé avec un équipement de transmission de puissance (100) en sorte qu'un bilan de puissance instantané dévoilant la valeur courante de puissance développée par le système de stockage est accessible à un système de gestion du système de stockage d'énergie électrique.

**12.** Dispositif de reconstruction de valeurs selon la revendication 10 ou la revendication 11, **caractérisé en ce que** ladite comparaison est faite en minimisant la différence entre les valeurs d'état de charge.

10

100

PV → ⊙⊙ → Réseau

Batterie

Fig. 1

I$_{batt}$ (A)

U$_{batt}$ (V)

U

I

Fig. 2

SOC (%)

t (h)

Fig. 3

P (W)

Fig. 4

T (°C)

Fig. 5

Fig. 6

Fig. 7

Fig. 8

Fig. 9

Fig. 10

Fig. 11

SOC (%)

Fig. 12

Tension (V)

Fig. 13

t (h)

Courant (A)

Fig. 14

t (h)

E0: cartographie préalable

valeurs transmises

Puissance développée

E1: calculs de coulométrie

E2: minimisation de la différence d'états de charge

valeurs reconstruites

Fig. 15

Europäisches
Patentamt

European
Patent Office

Office européen
des brevets

**RAPPORT DE RECHERCHE EUROPEENNE**

Numéro de la demande

**EP 25 21 0153**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 10 2021 203729 A1 (BOSCH GMBH ROBERT [DE]) 20 octobre 2022 (2022-10-20) * abrégé * * alinéas [0001], [0007], [0018], [0020], [0041], [0069] * * revendications 1,8 * | 1-12 | INV. H02J3/32 H02J7/00 H02J7/80 H02J7/82 H02J7/90 |
| A | XIANG MING ET AL: "State-of-Health Prognosis for Lithium-Ion Batteries Considering the Limitations in Measurements via Maximal Information Entropy and Collective Sparse Variational Gaussian Process", IEEE ACCESS, IEEE, USA, vol. 8, 6 octobre 2020 (2020-10-06), pages 188199-188217, XP011816286, DOI: 10.1109/ACCESS.2020.3029276 * le document en entier * | 1-12 | |
| A | US 2004/162683 A1 (VERBRUGGE MARK W [US] ET AL) 19 août 2004 (2004-08-19) * abrégé * * figures 1,3 * * alinéas [0010], [0011], [0012] * * revendications 1,5,10 * | 1-12 | DOMAINES TECHNIQUES RECHERCHES (IPC) H02J |

Le présent rapport a été établi pour toutes les revendications

| Lieu de la recherche | Date d'achèvement de la recherche | Examinateur |
|---|---|---|
| Munich | 17 février 2026 | Fiat, Cyrille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 0153

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2026

| Document brevet cité au rapport de recherche | Date de publication | Membre(s) de la famille de brevet(s) | Date de publication |
|---|---|---|---|
| DE 102021203729 A1 | 20-10-2022 | CN   115219931 A<br>DE 102021203729 A1 | 21-10-2022<br>20-10-2022 |
| US 2004162683  A1 | 19-08-2004 | US   2004162683 A1<br>US   2007159137 A1 | 19-08-2004<br>12-07-2007 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102021203729

**Littérature non-brevet citée dans la description**

- **M. XIANG et al.** State-of-Health Prognosis for Lithium-Ion Batteries Considering the Limitations in Measurements via Maximal Information Entropy and Collective Sparse Variational Gaussian Process. *IEEE Access*, 2020, vol. 8, 188199-188217